## Europäisches Patentamt
## European Patent Office
## Office européen des brevets

(11) Veröffentlichungsnummer: **0 454 941 B1**

# EUROPÄISCHE PATENTSCHRIFT

(45) Veröffentlichungstag der Patentschrift: **13.09.95**

(51) Int. Cl.6: **F02D 13/02**

(21) Anmeldenummer: **91100663.3**

(22) Anmeldetag: **21.01.91**

(54) **Verfahren und Vorrichtung zur Beeinflussung der Steuerzeiten einer Brennkraftmaschine.**

(30) Priorität: **04.05.90 DE 4014401**

(43) Veröffentlichungstag der Anmeldung:
**06.11.91 Patentblatt 91/45**

(45) Bekanntmachung des Hinweises auf die
Patenterteilung:
**13.09.95 Patentblatt 95/37**

(84) Benannte Vertragsstaaten:
**DE FR GB IT SE**

(56) Entgegenhaltungen:
**EP-A- 0 338 729**
**DE-A- 3 832 294**
**US-A- 4 856 465**

(73) Patentinhaber: **Dr.Ing.h.c. F. Porsche Aktiengesellschaft**
**Porschestrasse 42**
**D-70435 Stuttgart (DE)**

(72) Erfinder: **Brüstle, Claus**
**Fichtenstrasse 20**
**W-7258 Heimsheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Beeinflußung der Steuerzeiten einer Brennkraftmaschine nach dem Oberbegriff des Anspruches 1.

Aus der US-A-4856465 ist eine Vorrichtung zur Beeinflußung der Steuerzeiten der Einlaß- bzw. Auslaßventile einer Brennkraftmaschine bekannt, bei der die Ventilüberschneidung in Abhängigkeit von Drehzahl, Last und zeitlicher Änderung der Drehzahl verändert wird. Dabei wird die relative Lage der Einlaß-Nockenwelle gegenüber der Nockenwelle des Auslaßventils mit Hilfe eines koaxial benachbart angeordneten Schaltelements verändert. Dieses Schaltelement wird hydraulisch über ein magnetisch betätigbares Ventil angesteuert. Dieses Ventil selbst wird von einem elektronischen Steuergerät angesteuert, in dessen Speichereinheit die Schaltdrehzahl abgelegt ist bzw. in Abhängigkeit von der momentanen Drehzahl, ihrer zeitlichen Änderung und der Last berechnet wird. Hinweise auf konkrete Verfahrensschritte zu einer dynamischen Änderung der Schaltdrehzahl sind dieser Schrift jedoch nicht zu entnehmen.

Aus der EP-A-338729 ist weiterhin ein Verfahren zur Beeinflußung der Steuerzeiten einer Brennkraftmaschine bekannt, bei dem unterschiedliche Ventilerhebungskurven der Einlaßventile einstellbar sind. Dabei erfolgt eine Umschaltung zwischen einem Low-Speed-Modus und einem High-Speed-Modus. Die Umschaltung zwischen den beiden Ventilerhebungskurven erfolgt bei einer vom Steuergerät ermittelten Schaltdrehzahl, bei der die Ausgangsdrehmomente im Low-Speed-Modus bzw. im High-Speed-Modus ein definiertes Verhältnis haben.

Eine Vorrichtung zur Beeinflußung der Steuerzeiten einer Brennkraftmaschine mit zwei Nockenwellen derart, daß die erste Nockenwelle ihre relative Drehlage zu der zweiten Nockenwelle ändert, ist bekannt aus der DE-3421028. Eine solche Vorrichtung verändert die Überschneidungszeit von Einlaßzu Auslaßventilen und kann dadurch den Drehmomentverlauf, die Abgasemissionen, die Leistung und das Leerlaufverhalten einer Brennkraftmaschine beeinflussen.
Üblicherweise erfolgt die Verstellung der Nockenwelle in Abhängigkeit von Motorlast und -drehzahl derart, daß zumindest bei einer festgelegten Schaltdrehzahl der Brennkraftmaschine ein Schaltelement aktiviert wird, das die Einlaßnockenwelle so gegenüber der Auslaßnockenwelle verdreht, daß von einer kleinen auf eine große Ventilüberschneidung oder umgekehrt geschaltet wird, wie z.B. bekannt aus der Motortechnischen Zeitschrift MTZ 50 (1989), Nr.4, S.142.

Unabhängig davon, wie die Steuerzeiten beeinflußt werden, z.B. durch Verdrehung von Nockenwellen oder durch das Zu- und Abschalten von Gaswechselsteuerventilen und unabhängig davon ob diese Beeinflußung elektrisch, hydraulisch, mechanisch etc. realisiert wird, ist ein bestimmtes Zeitintervall nötig, um diese Beeinflußung zu realisieren. Die Länge dieses Zeitintervalls hängt bei den zumeist hydraulisch oder elektro-hydraulisch arbeitenden Vorrichtungen von Öltemperatur und Öldruck ab, wobei der Öldruck wiederum drehzahlabhängig ist.
Die Schaltdrehzahl wird überlicherweise in den Schnittpunkt der zu den verschiedenen Steuerzeiten gehörenden Drehmomentkurven gelegt, so daß bei einem Abfall des z.B. zu einer frühen Steuerzeit gehörenden Drehmomentverlaufes auf den günstigeren, zu einer späten Steuerzeit gehörenden Drehmomentverlauf umgeschaltet wird.
In jedem Fall kommt es während des für die Beeinflußung der Steuerzeiten nötigen Zeitintervalles zu einer in Form eines Drehmomenteinbruches auftretenden Fehlanpassung zwischen Motordrehzahl und möglichem Drehmoment, da dieses Drehmoment erst am Ende des Zeitintervalles erreicht wird. Die Fehlanpassung ist umso größer, je dynamischer diese nicht optimale Schaltdrehzahl durchfahren wird.

Aufgabe der vorliegenden Erfindung ist es daher, ein Verfahren zur Beeinflußung der Steuerzeiten einer Brennkraftmaschine zu schaffen, das in allen Drehzahlbereichen einen optimalen Drehmomentverlauf gewährleistet und insbesondere im instationären (Beschleunigungs-)Betrieb dazu dient, die "statische" Schaltdrehzahl auf den Wert einer ein optimales Drehmoment ergebenden (dynamischen) Schaltdrehzahl zu verschieben.

Diese Aufgabe wird erfindungsgemäß mit den kennzeichnenden Merkmalen des Anspruchs 1 gelöst.

Das erfindungsgemäße Verfahren vermeidet vorteilhafterweise den infolge des für die Beeinflußung der Steuerzeiten nötigen Zeitintervalles auftretenden Drehmomenteinbruch, in dem in Abhängigkeit von der Dynamik, mit der die Motordrehzahl ansteigt, die Schaltdrehzahl um eine Differenzdrehzahl auf den Wert einer optimalen Schaltdrehzahl verschoben wird. Der Wert dieser Differenzdrehzahl ist in zeitlicher Abhängigkeit von der Zunahme der Motordrehzahl in einem Kennfeld eines Steuergerätes der Brennkraftmaschine gespeichert. Da das für den Verdrehvorgang benötigte Zeitintervall im wesentlichen konstant ist, wird in vorteilhafter Ausgestaltung des Verfahrens die optimale Schaltdrehzahl umso weiter vor die festgelegte Schaltdrehzahl verlegt, je dynamischer die Motordrehzahl ansteigt.
Das bedeutet im praktischen Fahrbetrieb eines mit einer nach diesem Verfahren arbeitenden Brennkraftmaschine ausgestatteten Kraftfahrzeuges, daß bei starken Beschleunigungsvorgängen, insbesondere in niedrigen Fahrstufen des Getriebes, die Beeinflußung der Steuerzeiten so rechtzeitig eingeleitet wird, daß es zwischen den Drehmomentkurven für die verschiedenen Steuerzeiten nur zu einer sehr geringen Fehlanpassung kommt, die deutlich kleiner ist, als die Fehlanpassung bei rein statisch festgelegter Schaltdrehzahl.

Der Betrag, um den die festgelegte Schaltdrehzahl vorverlegt wird, wird in einfacher Weise auf einem dynamischen Motorenprüfstand ermittelt und anschließend in einem Kennfeld des ohnehin vorhandenen, elektronischen Steuergerätes der Brennkraftmaschine abgespeichert.

Dieses Kennfeld enthält mindestens eine Kennlinie für den Vollastbetrieb bei betriebswarmer Brennkraftmaschine und eine Kennlinie für den Betrieb mit niedriger Motoröltemperatur.

Zur weiteren Verbesserung des Verfahrens können mehrere Kennfelder in einer Mappe in dem Steuergerät gespeichert sein, um z.B. jeder einzelnen Fahrstufe des Getriebes optimale Diffenzdrehzahlen zuzuordnen. Desweiteren können jedem Kennfeld Gruppen von Schaltdrehzahlen zugeorndet sein, um so z.B. bei einer niedrigen Drehzahl von einer geringen auf eine große Ventilüberschneidung und bei einer höheren Drehzahl umgekehrt zu schalten.

In Abhängigkeit von der Stellung eines manuell zu bedienenden Fahrprogrammschalters, der auch auf das Getriebe wirken kann, kann in weiterer Ausgestaltung aus einer in dem Steuergerät gespeicherten Liste von Schaltdrehzahlen oder Gruppen von Schaltdrehzahlen eine für das jeweils gewählte Fahrprogramm optimale ausgewählt werden. Das Verfahren ist für jede Art von Brennkraftmaschinen, deren Gaswechsel von Einlaß- und Auslaßventilen gesteuert wird, geeignet.

Die Erfindung wird anhand der nachfolgend aufgeführten Figuren beispielhaft erläutert.

Es Zeigen

Fig.1    ein idealisiertes Drehmoment/Drehzahl-Diagramm einer bekannten Brennkraftmaschine,

Fig.2    ein reales Drehmoment/Drehzahl-Diagramm einer bekannten Brennkraftmaschine,

Fig.3    ein Drehmoment/Drehzahl-Diagramm einer mit dem Verfahren betriebenen Brennkraftmaschine,

Fig.4    ein in einem Steuergerät gespeichertes Kennfeld einer Brennkraftmaschine nach Fig. 3 und

Fig.5    schematisch eine Vorrichtung zur Durchführung des Verfahrens

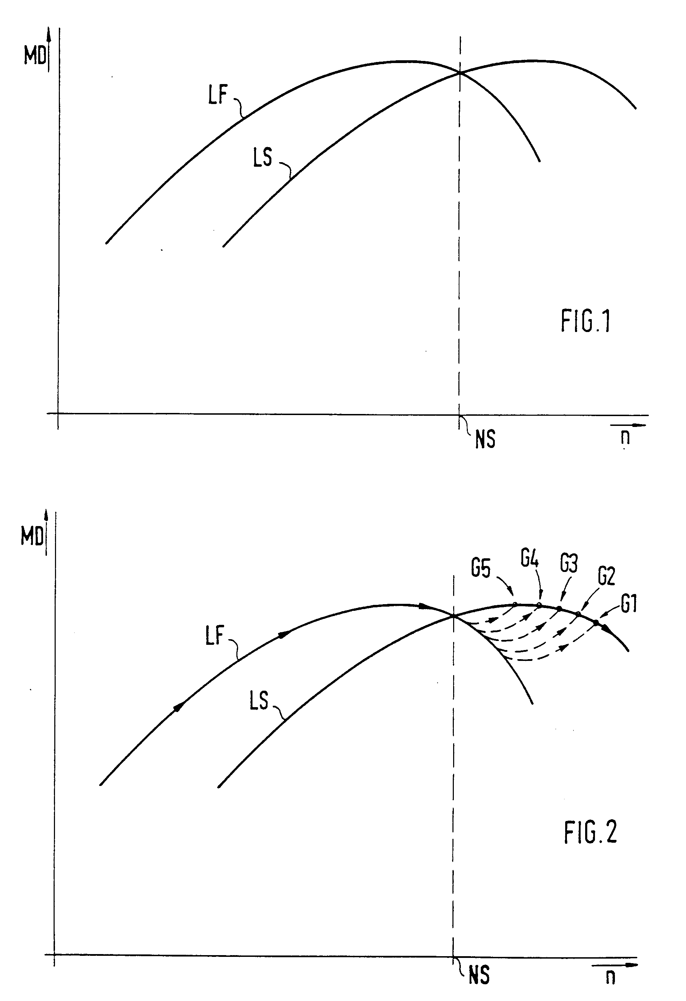

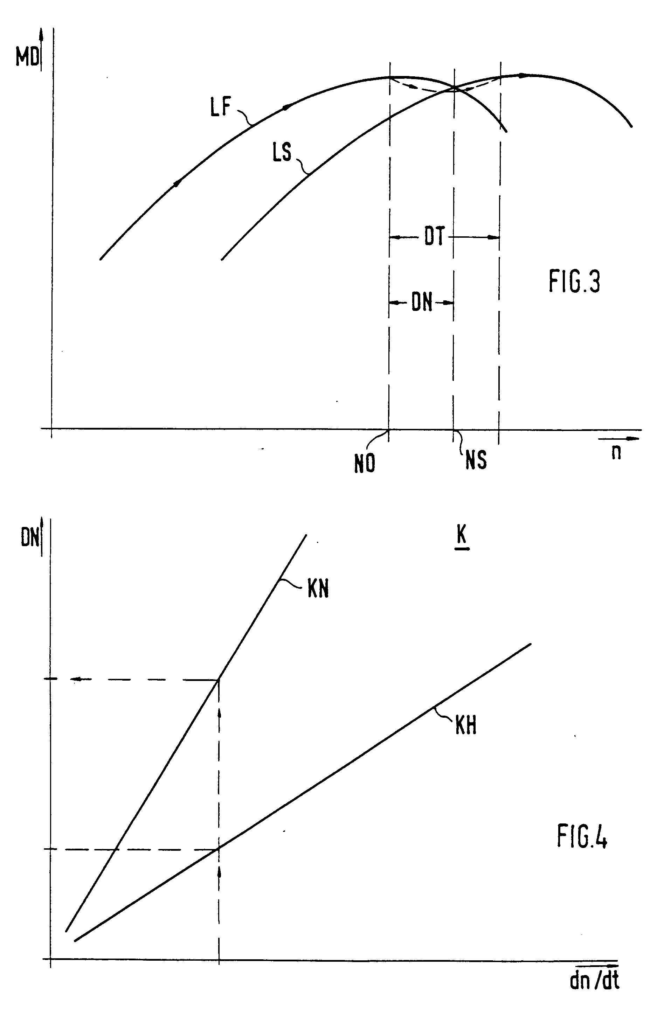

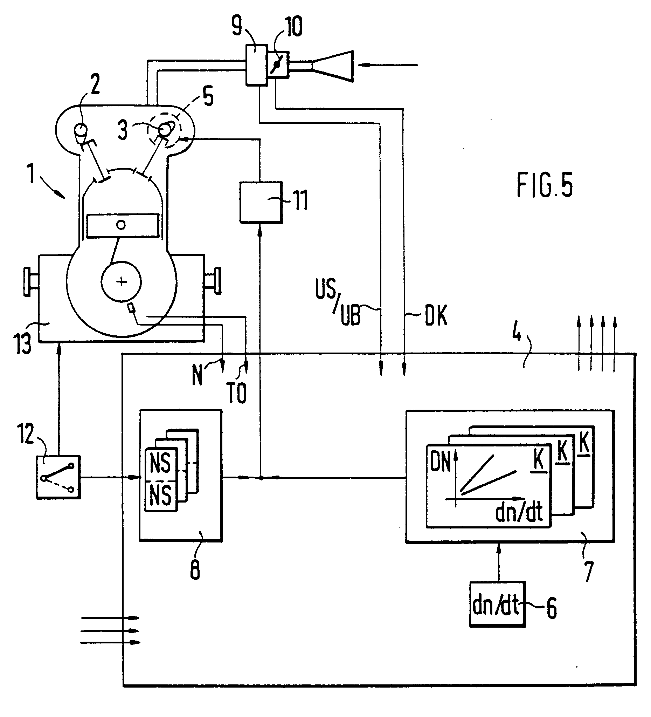

Eine in Fig.5 gezeigte Brennkraftmaschine 1 eines Kraftfahrzeuges weist eine in ihrer relativen Drehlage gegenüber einer auf Auslaßventile wirkenden Nockenwelle 2 veränderbare, auf Einlaßventile wirkende Nockenwelle 3 auf. Ein von einem elektronischen Steuergerät 4 angesteuertes, an den Motorölkreislauf angeschlossenes, hydraulisches Schaltelement 5 verdreht die Nockenwelle 3 aufgrund eines von dem Steuergerät 4 abgegebenen Schaltsignales von einer frühen Einlaßstellung in eine späte Einlaßstellung, d.h. die Ventilüberschneidung zwischen Einlaß- und Auslaßventilen wird verringert. Die sich für diese beiden Stellungen ergebenden Drehmomentkurven der Brennkraftmaschine 1 sind als Vollastlinien in Fig.1 für eine bekannte Brennkraftmaschine aufgetragen. Dort ist das Brennkraftmaschinendrehmoment MD über der Brennkraftmaschinendrehzahl n aufgetragen. Unterhalb einer in dem Steuergerät 4 abgespeicherten Schaltdrehzahl NS wird die Brennkraftmaschine 1 gemäß der Linie LF in der frühen Einlaßstellung betrieben, oberhalb der Schaltdrehzahl NS gemäß der Linie LS in der späten Einlaßstellung.

Das Diagramm gemäß Fig.1 ist insofern idealisiert, als daß der Verdrehvorgang in einem unendlich kleinen Zeitintervall erfolgt. Tatsächlich benötigt das Schaltelement jedoch ein endliches, nahezu konstantes Zeitintervall DT, um den Verdrehvorgang zu realisieren. Da das den Verdrehvorgang auslösende Schaltsignal erst bei Erreichen der Schaltdrehzahl NS ausgelöst wird, ist die späte Einlaßstellung erst oberhalb dieser Drehzahl NS erreicht.

Fig.2 verdeutlicht den durch Pfeile entlang der Linien LF und LS dargestellten, tatsächlichen Drehmomentverlauf für die verschiedenen Vorwärtsfahrstufen erster bis fünfter Gang G1 bis G5. Klar ersichtlich ist die in Form von Drehmomenteinbrüchen auftretende Fehlanpassung zwischen Drehzahl n und theoretisch möglichem Drehmoment MD oberhalb der Drehzahl NS. Besonders nachteilig tritt dieser Effekt in den niedrigen Fahrstufen auf, da sich hier die Drehzahl n schneller erhöht und das erzielte Drehmoment MD vergleichsweise lange der bereits abfallenden Linie LF entspricht.

Zur Beseitigung dieses Mangels ist in dem Steuergerät 4 mindestens ein Kennfeld K gemäß Fig.4 abgespeichert. Dort sind Differenzdrehzahlen DN über der zeitlichen Änderung dt der Drehzahl n in Form der Funktion $DN = k \cdot \frac{dn}{dt}$ mit k = Konstante, aufgetragen. Das Kennfeld K enthält eine Kennlinie KH für den Vollastbetrieb der betriebswarmen Brennkraftmaschine 1 und eine Kennlinie KN für den Betrieb der Brennkraftmaschine 1 bei einer niedrigen Motoröltemperatur TO.

Ein in dem Steuergerät 4 enthaltener Differentiator 6 bildet laufend einen aktuellen Quotienten dn/dt, dem über die Kennlinien KH oder KN eine bestimmte Differenzdrehzahl DN zugeordnet ist. Der aus dem Kennfeld K ausgelesene Wert für DN wird in dem Steuergerät 4 der Schaltdrehzahl NS so überlagert, daß die Drehzahl NS in Abhängigkeit von der Dynamik des Beschleunigungsvorganges auf eine optimale Schaltdrehzahl NO vorverlegt wird, d.h. das von dem Steuergerät 4 kommende Schaltsignal wird früher ausgelöst.

Das Ergebnis dieser Vorverlegung des Schaltsignales ist für eine beliebige Fahrstufe in Fig.3 dargestellt. Die Schaltdrehzahl NS ist vorverlegt auf die optimale Schaltdrehzahl NO, der tatsächliche Drehmomentverlauf ist wiederum durch Pfeile entlang der Linien LF und LS dargestellt. Es ist ersichtlich, daß es in dem Zeitintervall DT bzw. dem Bereich der Differenzdrehzahl DN zwar zu einer geringen Abweichung von dem maximal möglichen Drehmoment MD kommt, diese Abweichung ist aber einerseits sehr viel geringer als die Fehlanpassung gemäß Fig.2, andererseits erfolgt sie in einem niedrigeren Drehzahlbereich, also bei geringerer Leistung der Brennkraftmaschine 1, so daß sich eine geringe Fehlanpassung nicht so deutlich auswirkt.

Ist die Motoröltemperatur TO niedrig, benötigt das Schaltelement 5 ein längeres Zeitintervall DT um den Verdrehvorgang durchzuführen. Für diesen Fall werden die Werte der Differenzdrehzahl DN anhand der Kennlinie KN aus dem Kennfeld K ausgelesen. Diese Linie KN verläuft steiler als die Linie KH, ordnet einem Wert dn/dt also einen größeren Wert DN zu, so daß der Verdrehvorgang ausreichend früh eingeleitet wird.

In dem Steuergerät 4 können mehrere Kennfelder K abgespeichert sein, z.B. um jeder einzelnen Fahrstufe G1 bis G5 ein eigenes Kennfeld K und/oder um für verschiedene Laststufen, die unterhalb der Vollast liegen, eigene Differenzdrehzahlen DN zuzuordnen. Weiterhin können mehrere Schaltdrehzahlen NS oder Gruppen von Schaltdrehzahlen NS abgespeichert sein, um z.B. bereits bei einer niedrigen Drehzahl n von einer geringen auf eine große Ventilüberschneidung umzuschalten und/oder um verschiedene Schaltdrehzahlen NS in Abhängigkeit von einem vom Fahrzeugführer zu bestimmenden Fahrprogrammes auszuwählen. Die Schaltdrehzahlen NS und die Differenzdrehzahlen DN können dabei z.B. in einem Economy-Fahrprogramm auf geringsten Kraftstoffverbrauch und in einem Sport-Fahrprogramm auf größte Leistung bzw. Drehmoment ausgelegt sein. Der Schalter zur Auswahl des Fahrprogrammes kann dabei der in vielen Kraftfahrzeugen bereits vorhandene, auf das Getriebe wirkende Fahrprogrammschalter sein.

Eine mögliche Vorrichtung zur Durchführung des Verfahrens ist in Fig.5 schematisch gezeigt.

In dem elektronischen Steuergerät 4 sind eine Mappe 7 mit mehreren Kennfeldern K sowie eine Liste 8 mit mehreren Schaltdrehzahlen NS gespeichert. Der Differentiator 6 bildet den Quotienten dn/dt entweder über ein Drehzahlsignal N der Brennkraftmaschine 1 oder über ein elektrisches Signal US/UB von einem Luftmassenmesser 9 und einem der Stellung einer Drosselklappe 10 entsprechenden Signal DK. Weiterhin verarbeitet das Steuergerät 4 zumindest die Motoröltemperatur TO, anhand der die Kennlinien KH oder KN in den Kennfeldern K der Mappe 7 ausgewählt werden. Die aus der Mappe 7 gewählte Differenzdrehzahl DN wird der in der Liste 8 festgeschriebenen Schaltdrehzahl NS überlagert und anschließend löst das Steuergerät 4 ein Schaltsignal aus, welches auf einen Energiespeicher 11 wirkt, der das Schaltelement 5 aufgrund dieses Signal es mit Drucköl beaufschlagt.

Die aus der Liste 8 ausgewählten Schaltdrehzahlen NS können über einen Fahrprogrammschalter 12 beeinflußt werden, der auch auf ein der Brennkraftmaschine 1 zugeordnetes Getriebe 13 wirken kann.

Falls das Schaltelement 5 den Verdrehvorgang der Nockenwelle 3 rein elektrisch bewerkstelligt, entfällt die Abhängigkeit von der Motoröltemperatur TO und der Energiespeicher 11 ist beispielsweise eine Lichtmaschine der Brennkraftmaschine 1.

**Patentansprüche**

1. Verfahren zur Beeinflussung der Steuerzeiten einer Brennkraftmaschine (1) mit mindestens je einem dem Gaswechsel dienenden Einlaßventil und einem Außlaßventil, wobei mit Hilfe eines von einem elektronischen Steuergerät (4) gesteuerten Schaltelementes (5) bei mindestens einer in dem Steuergerät (4) gespeicherten Schaltdrehzahl (NS) die Steuerzeit des Einlaßventils gegenüber dem Auslaßventil veränderbar ist, welche Schaltdrehzahl (NS) in Abhängigkeit von der zeitlichen Änderung dn/dt der Drehzahl n der Brennkraftmaschine (1) um eine in mindestens einem Kennfeld (K) des Steuergeräts (4) gespeicherten Differenzdrehzahl DN auf den Wert einer ein optimales Drehmoment (MD) ergebenden Schaltdrehzahl (NO) verschoben wird, **dadurch gekennzeichnet,** daß der Wert der optimalen Schaltdrehzahl (NO) kleiner ist als der Wert der Schaltdrehzahl (NS) und daß der Wert der Differenzdrehzahl DN mit zunehmend schneller werdender zeitlicher Änderung dn/dt der Drehzahl n steigt, wobei

$$DN = k \times \frac{dn}{dt}$$

ist, mit k = Konstante.

2. Verfahren nach Anspruch 1, **dadurch gekennzeichnet**, daß das in dem Steuergerät (4) gespeicherte Kennfeld (K) mindestens eine Kennlinie (KH) für den Vollastbetrieb der Brennkraftmaschine (1) enthält.

3. Verfahren nach Anspruch 1 oder 2, **dadurch gekennzeichnet**, daß das in dem Steuergerät (4) gespeicherte Kennfeld (K) mindestens eine Kennlinie (KN) für den Betrieb der Brennkraftmaschine (1) mit einer niedrigen Motoröltemperatur (TO) enthält.

4. Verfahren nach einem oder mehreren der vorhergehenden Ansprüche, **dadurch gekennzeichnet**, daß in dem Steuergerät (4) eine mehrere Kennfelder (K) enthaltende Mappe (7) gespeichert ist.

5. Verfahren nach Anspruch 4, **dadurch gekennzeichnet**, daß jedes Kennfeld (K) einer Fahrstufe (G1 bis G5) eines zu der Brennkraftmaschine (1) gehörigen Getriebes (13) Zugeordnet ist.

6. Verfahren nach einem oder mehreren der vorhergehenden Ansprüche, **dadurch gekennzeichnet**, daß in einer Liste (8) in dem Steuergerät (4) mehrere Schaltdrehzahlen (NS) oder Gruppen von Schaltdrehzahlen (NS) gespeichert sind.

7. Verfahren nach Anspruch 6, **dadurch gekennzeichnet**, daß die Auswahl aus der Liste (8) in Abhängigkeit von einem Fahrprogrammschalter (12) erfolgt.

8. Verfahren nach einem oder mehreren der vorhergehenden Ansprüche, **dadurch gekennzeichnet**, daß die zeitliche Änderung der Drehzahl n in Form des Quotienten dn/dt in einem Differentiator (6) des Steuergerätes (4) auf der Basis eines Drehzahlsignales (N) der Brennkraftmaschine (1) gebildet wird.

9. Verfahren nach einem oder mehreren der vorhergehenden Ansprüche, **dadurch gekennzeichnet**, daß die zeitliche Änderung der Drehzahl n in Form des Quotienten dn/dt in einem Differentiator (6) des Steuergerätäs (4) auf der Basis eines elektrischen Signal es (US/UB) eines Luftmassenmessers (9) und einem der Stellung einer Drosselklappe (10) entsprechenden Signales (DK) gebildet wird.

**Claims**

1. A method for influencing the timing of an internal combustion engine (1) having in each case at least one intake valve serving for the gas exchange and one exhaust valve, in which the timing of the intake valve can be varied with respect to the exhaust valve by means of a switching element (5), controlled by an electronic control unit (4), at at least one switching speed (NS) stored in the control unit (4), which switching speed (NS) is shifted in dependence on the time rate of change dn/dt of the speed n of the internal combustion engine (1) by a differential speed DN stored in at least one characteristic graph (K) of the control unit (4) to the value of a switching speed (NO) producing an optimal torque (MD), characterised in that the value of the optimal switching speed (NO) is smaller than the value of the switching speed (NS) and in that the value of the differential speed DN increases with increasingly fast time rate of change dn/dt of the speed n, where DN = k x dn/dt, k being a constant.

2. A method according to Claim 1, characterised in that the characteristic graph (K) stored in the control unit (4) contains at least one characteristic curve (KH) for the full-load operation of the internal combustion engine (1).

3. A method according to Claim 1 or 2, characterised in that the characteristic graph (K) stored in the control unit (4) contains at least one characteristic curve (KN) for the operation of the internal combustion engine (1) at a low engine-oil temperature (TO).

4. A method according to one or more of the preceding claims, characterised in that a file (7) containing a plurality of characteristic graphs (K) is stored in the control unit (4).

5. A method according to Claim 4, characterised in that each characteristic graph (K) is assigned to a gear step (G1 to G5) of a gear unit (13) belonging to the internal combustion engine (1).

6. A method according to one or more of the preceding claims, characterised in that a plurality of switching speeds (NS) or groups of switching speeds (NS) are stored in a list (8) in the control unit (4).

7. A method according to Claim 6, characterised in that the selection from the list (8) is made in dependence on a driving-program selector (12).

8. A method according to one or more of the preceding claims, characterised in that the time rate of change of the speed in the form of the quotient dn/dt is formed in a differentiator (6) of the control unit (4) on the basis of a speed signal (N) of the internal combustion engine (1).

9. A method according to one or more of the preceding claims, characterised in that the time rate of change of the speed in the form of the quotient dn/dt is formed in a differentiator (6) of the control unit (4) on the basis of an electric signal (US/UB) of a mass air flow meter (9) and a signal (DK) corresponding to the position of a throttle valve (10).

**Revendications**

1. Procédé de réglage du calage des soupapes d'un moteur à combustion interne (1) comprenant au moins une soupape d'admission et une soupape d'échappement servant à la circulation des gaz, le calage de la soupape d'admission par rapport à la soupape d'échappement pouvant être modifié à l'aide d'un élément de commutation (5) commandé par un dispositif de commande électronique (4) pour au moins une vitesse de rotation de commutation (NS) mise en mémoire dans le dispositif de commande (4), laquelle vitesse de rotation de commutation (NS) est décalée en fonction de la modification dans le temps dn/dt de la vitesse de rotation n du moteur à combustion interne (1) d'une vitesse de rotation différentielle (DN) mise en mémoire dans au moins un champ caractéristique (K) du dispositif de commande (4) sur la valeur d'une vitesse de rotation de commutation (NO) fournissant un couple de rotation optimal (MD), caractérisé en ce que la valeur de la vitesse de rotation de commutation optimale (NO) est inférieure à la valeur de la vitesse de rotation de commutation (NS) et en ce que la valeur de la vitesse de rotation différentielle (DN) monte quand la modification dans le temps dn/dt de la vitesse de rotation n devient continuellement plus rapide, DN étant égal à k.(dn/dt) où k est une constante.

2. Procédé selon la revendication 1, caractérisé en ce que le champ caractéristique (K) mis en mémoire dans le dispositif de commande (4) contient au moins une ligne caractéristique (KH) pour le fonctionnement en charge totale du moteur à combustion interne (1).

3. Procédé selon la revendication 1 ou 2, caractérisé en ce que le champ caractéristique (K) mis en mémoire dans le dispositif de commande (4) contient au moins une ligne caractéristique (KN) pour le fonctionnement du moteur à combustion interne sur une faible température (TO) de l'huile du moteur.

4. Procédé selon l'une quelconque ou plusieurs des revendications précédentes, caractérisé en ce qu'une carte (7) contenant plusieurs champs caractéristiques (K) est mise en mémoire dans le dispositif de commande (4).

5. Procédé selon la revendication 4, caractérisé en ce que chaque champ caractéristique (K) est associé à une vitesse (G1 à G5) d'une boîte de vitesses (13) appartenant au moteur à combustion interne (1).

6. Procédé selon l'une quelconque ou plusieurs des revendications précédentes, caractérisé en ce que plusieurs vitesses de rotation de commutation (NS) ou groupes de vitesses de rotation de commutation (NS) sont stockés dans une liste (8) du dispositif de commande (4).

7. Procédé selon la revendication 6, caractérisé en ce que la sélection dans la liste (8) s'effectue au moyen d'un commutateur de programme de marche (12).

8. Procédé selon l'une quelconque ou plusieurs des revendications précédentes, caractérisé en ce que la modification dans le temps de la vitesse de rotation n est formée sous la forme du quotient dn/dt dans un différenciateur (6) du dispositif de commande (4) sur la base d'un signal de vitesse de rotation (N) du moteur à combustion interne (1).

9. Procédé selon l'une quelconque ou plusieurs des revendications précédentes, caractérisé en ce que la modification dans le temps de la vitesse de rotation n est formée sous forme du quotient dn/dt dans un différenciateur (6) du dispositif de commande (4) sur la base d'un signal électrique (US/UB) d'un dispositif de mesure de masse d'air (9) et d'un signal (DK) correspondant à la position d'un clapet d'étranglement (10).

FIG.1

FIG.2

FIG.3

K

FIG.4

EP 0 454 941 B1

FIG.5

US/UB    DK

N    TO

DN    K K K

dn/dt

dn/dt — 6

9